# EUROPEAN PATENT APPLICATION

(11) **EP 4 394 273 A1**
(43) Date of publication of application: **03.07.2024**
(21) Application number: 22871351.7
(22) Date of filing: 22.03.2022
(51) Int. Cl.: F24F 11/58, F24F 11/56, H04L 12/28, G06Q 30/06

(54) **AIR CONDITIONER CONTROL METHOD AND APPARATUS BASED ON DATA OF SHARED SENSOR, AND STORAGE MEDIUM**

(30) Priority: 23.09.2021 CN 202111119668
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: FAN, Qifeng, Foshan, Guangdong 528311 (CN)
(74) Representative: RGTH
(86) International application number: PCT/CN2022/082326
(87) International publication number: WO 2023/045286

(57) **Abstract**

Disclosed are a method and device for controlling an air conditioner based on data of a shared sensor, and a storage medium. The method for controlling the air conditioner based on data of the shared sensor includes: renting a shared sensor from a second air conditioner with the shared sensor to be rented, the shared sensor being configured to detect outdoor environmental information; receiving a detection value of the shared sensor sent by the second air conditioner; and controlling operation of the first air conditioner according to the detection value. The present application rents the shared sensor of the second air conditioner and uses the detection value of the shared sensor to control the operation of the air conditioner. In this way, the cost of the air conditioner is reduced and the utilization rate of the sensor is improved.

## Description

This application claims priority to Chinese Patent Application No. 202111119668.4, filed on September 23, 2021, the entire contents of which are incorporated herein by reference.

### TECHNICAL FIELD

The present application relates to the technical field of an air conditioner, and in particular to a method and a device for controlling the air conditioner based on data of a shared sensor, and a storage medium.

### BACKGROUND

At present, air conditioners, as an important part of smart homes, bring many conveniences to people's daily lives and improve the comfort of the living environment. There are many functions in the air conditioner, and the realization of these functions cannot be separated from the cooperation of various sensors. For example, when the air conditioner is running in defrost mode, it needs to obtain the temperature value of the outdoor environment, and then determine the corresponding operating parameters based on the temperature value. The temperature value of the outdoor environment needs to be detected using a temperature sensor. Therefore, if the air conditioner is desired to realize various functions, various sensors need to be installed on the air conditioner accordingly, which increases the cost of the air conditioner.

### SUMMARY

The embodiments of the present application provide a method and a device for controlling the air conditioner based on data from a shared sensor, and a storage medium, aiming to solve the problem of high cost of existing air conditioners.

In order to achieve the above purpose, an aspect of the present application provides a method for controlling the air conditioner based on data from a shared sensor, which is applied to a first air conditioner. The method includes:
renting a shared sensor from a second air conditioner with the shared sensor to be rented, the shared sensor being configured to detect outdoor environmental information;
receiving a detection value of the shared sensor sent by the second air conditioner; and
controlling operation of the first air conditioner according to the detection value.

In an embodiment, controlling the operation of the first air conditioner according to the detection value includes:
obtaining a distance value between each of the second air conditioners and the first air conditioner, and determining a first weight value of each of the second air conditioners according to each of the distance values;
performing a weighted sum on each of the detection values according to each of the first weight values to obtain a weighted average; and
using the weighted average as a target detection value of the first air conditioner, and controlling the operation of the first air conditioner according to the target detection value.

In an embodiment, before renting the shared sensor from the second air conditioner with the shared sensor to be rented, the method includes:
sending a rental request to a cloud according to the shared sensor, so that the cloud sends the rental request to the second air conditioner with the shared sensor to be rented according to information of the shared sensor and the first air conditioner; or
sending the rental request to the second air conditioner according to the shared sensor,
in response to determining that the shared sensor in the rental request is a shared sensor open to the public, the second air conditioner sends the detection value of the shared sensor to the first air conditioner.

In an embodiment, sending the rental request to the cloud according to the shared sensor includes:
obtaining rental information of the shared sensor for renting, wherein the rental information includes rental duration and rental quantity;
sending a rental request including the rental information to the cloud according to the shared sensor; or
sending a rental request to the second air conditioner according to the shared sensor includes:
sending the rental request including the rental information to the second air conditioner according to the shared sensor.

In an embodiment, the method further includes:
receiving a rental cancellation request triggered by a user, and obtaining the second air conditioner to be cancelled from the rental according to the rental cancellation request;
sending a rental cancellation instruction to the second air conditioner to be cancelled from the rental to cancel rental of the shared sensor of the second air conditioner to be cancelled from the rental; or
sending the rental cancellation instruction to the cloud according to the second air conditioner to be cancelled from the rental, so that the cloud sends the rental cancellation instruction to the second air conditioner to be cancelled from the rental, so as to cancel the rental of the shared sensor of the second air conditioner to be cancelled from the rental.

Besides, in order to achieve the above objective, another aspect of the present application further provides a method for controlling an air conditioner based on data of a shared sensor, applied to a second air conditioner, including:
receiving a rental request sent by a cloud or a first air conditioner, and obtaining the shared sensor to be rented according to the rental request; and
in response to determining that the shared sensor is a shared sensor open to the public, obtaining a detection value of the shared sensor and sending the detection value to the first air conditioner; or
sending the detection value to the cloud, so that the cloud sends the detection value to the first air conditioner.

Besides, in order to achieve the above objective, another aspect of the present application further provides a method for controlling an air conditioner based on data of a shared sensor, applied to a cloud, including:
receiving a rental request sent by a first air conditioner;
obtaining information about the shared sensor to be rented and the first air conditioner according to the rental request;
sending the rental request to a second air conditioner with the shared sensor to be rented according to the information about the shared sensor and the first air conditioner; and
receiving a detection value of the shared sensor sent by the second air conditioner, and sending the detection value to the first air conditioner.

In an embodiment, the method further includes:
obtaining rental duration of each of the shared sensors, a distance value between the first air conditioner and each of the second air conditioners, and fee amount required to rent the shared sensor;
determining a second weight value for each of the second air conditioners according to the rental duration and the distance value;
determining a rental fee for each of the second air conditioners according to the fee amount and each of the second weight values; and
settling rental according to the rental fee.

Besides, in order to achieve the above objective, another aspect of the present application further provides a sharing device, including a memory, a processor, and a program for controlling an air conditioner based on data of a shared sensor stored in the memory and run on the processor, and steps of the method for controlling an air conditioner based on data of a shared sensor as described above are implemented when the program for controlling the air conditioner based on the data of the shared sensor is executed by the processor.

Besides, in order to achieve the above objective, another aspect of the present application further provides a storage medium, a program for controlling an air conditioner based on data of a shared sensor is stored on the storage medium, and steps of the method for controlling an air conditioner based on data of a shared sensor as described above are implemented when the program for controlling the air conditioner based on the data of the shared sensor is executed by a processor.

The present application provides a method for controlling an air conditioner based on data of a shared sensor, including: renting a shared sensor from a second air conditioner with the shared sensor to be rented, the shared sensor being configured to detect outdoor environmental information; receiving a detection value of the shared sensor sent by the second air conditioner; and controlling operation of the first air conditioner according to the detection value. The present application rents the shared sensor of the second air conditioner and uses the detection value of the shared sensor to control the operation of the air conditioner. In this way, the cost of the air conditioner is reduced and the utilization rate of the sensor is improved.

### BRIEF DESCRIPTION OF THE DRAWINGS

FIG. 1 is a schematic structural diagram of a terminal of a hardware operating environment involved in an embodiment of the present application.
FIG. 2 is a schematic flowchart of a method for controlling an air conditioner based on data of a shared sensor according to a first embodiment of the present application.
FIG. 3 is a schematic flowchart before renting the shared sensor from a second air conditioner having the shared sensor to be rented in the method for controlling the air conditioner based on data of the shared sensor according to the present application.
FIG. 4 is a schematic flowchart of the method for controlling the air conditioner based on data of the shared sensor according to a third embodiment of the present application.
FIG. 5 is a schematic flowchart of the method for controlling the air conditioner based on data of the shared sensor according to a fourth embodiment of the present application.
FIG. 6 is a schematic operational flowchart of the method for controlling the air conditioner based on data of the shared sensor according to the present application.

The realization of the purpose, functional features and advantages of the present application will be further described in conjunction with the embodiments and with reference to the accompanying drawings.

### DETAILED DESCRIPTION OF THE EMBODIMENTS

It should be understood that the specific embodiments described here are only used to explain the present application, and are not intended to limit the present application.

In order to better understand the above technical solutions, exemplary embodiments of the present application will be described in more detail below with reference to the accompanying drawings. Although exemplary embodiments of the present application are shown in the drawings, it should be understood that the present application can be implemented in various forms and should not be limited to the embodiments set forth herein. Rather, these embodiments are provided to provide a thorough understanding of the present application, and to fully convey the scope of the present application to those skilled in the art.

If the air conditioner wants to realize various functions, it needs to install various shared sensors accordingly, which increases the cost of the air conditioner. In the present application, the shared sensor is rented to a second air conditioner that has a shared sensor to be rented. The shared sensor is used to detect outdoor environment information, receive the detection value of the shared sensor sent by the second air conditioner, and control the operation of a first air conditioner according to the detection value. The present application rents the shared sensor of the second air conditioner and uses the detection value of the shared sensor to control the operation of the air conditioner. In this way, the cost of the air conditioner is reduced and the utilization rate of the sensor is improved.

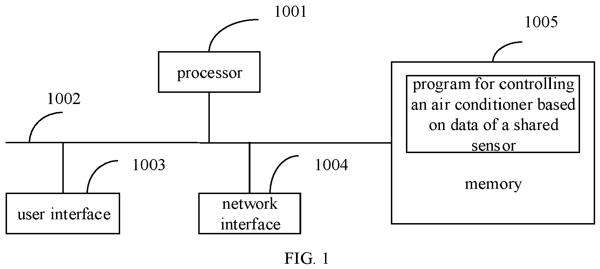

As shown in FIG. 1, FIG. 1 is a schematic structural diagram of the terminal of the hardware operating environment involved in the embodiment of the present application.

As shown in FIG. 1, the terminal can include: a processor 1001 (such as a CPU), a network interface 1004, a user interface 1003, a memory 1005 and a communication bus 1002. The communication bus 1002 is configured to realize connection communication between these components. The user interface 1003 can include a display and an input unit such as a keyboard. The user interface 1003 can optionally include a standard wired interface and a wireless interface. The network interface 1004 can optionally include a standard wired interface or a wireless interface (such as a WI-FI interface). The memory 1005 can be a highspeed random access memory (RAM) or a stable memory (non-volatile memory), such as a disk memory. The memory 1005 can optionally be a storage device independent of the foregoing processor 1001.

Those skilled in the art can understand that the terminal structure shown in FIG. 1 does not constitute a limitation on the terminal device, and can include more or fewer components than shown in the drawings, or a combination of certain components, or differently arranged components.

As shown in FIG. 1, a memory 1005 as a computer-readable storage medium can include an operating system, a network communication module, a user interface module, and a program for controlling the air conditioner based on data from the shared sensor.

In the terminal shown in FIG. 1, the network interface 1004 is mainly configured to perform data communicate with the background server; the user interface 1003 is mainly configured to perform data communicate with the client (user); and when the terminal is the first air conditioner, the processor 1001 may be configured to call a program in the memory 1005 that controls the air conditioner based on the data from the shared sensor, and perform the following operations:
renting a shared sensor from a second air conditioner having the shared sensor to be rented, the shared sensor being used to detect outdoor environmental information;
receiving a detection value of the shared sensor sent by the second air conditioner; and
controlling operation of the first air conditioner according to the detection value.

When the terminal is the second air conditioner, the processor 1001 may be configured to call a program in the memory 1005 that controls the air conditioner based on the data of the shared sensor, and perform the following operations:
receiving a rental request sent by the cloud or the first air conditioner, and obtaining the shared sensor to be rented according to the rental request;
determining that the shared sensor is a shared sensor open to the public, obtaining the detection value of the shared sensor, and sending the detection value to the first air conditioner; or
sending the detection value to the cloud, so that the cloud sends the detection value to the first air conditioner.

When the terminal is the cloud, the processor 1001 can be configured to call a program in the memory 1005 that controls the air conditioner based on the data of the shared sensor, and perform the following operations:
receiving a rental request sent by the first air conditioner;
obtaining information of the shared sensor to be rented and the first air conditioner according to the rental request;
sending the rental request to the second air conditioner with the shared sensor to be rented based on the information of the shared sensor and the first air conditioner; and
receiving the detection value of the shared sensor sent by the second air conditioner, and sending the detection value to the first air conditioner.

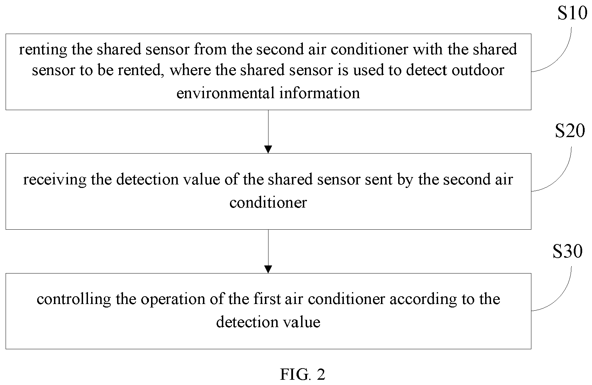

Referring to FIG. 2, FIG. 2 is a schematic flowchart of a method for controlling the air conditioner based on data of the shared sensor according to a first embodiment of the present application.

The embodiment of the present application provides an embodiment of a method for controlling the air conditioner based on data of the shared sensor. It should be noted that although the logical sequence is shown in the flowchart, in some cases, the steps shown or described can be performed in a different order from that here. Follow the steps shown or described.

The method for controlling the air conditioner based on data of the shared sensor is applied to the first air conditioner and includes the following steps:
step S10, renting the shared sensor from the second air conditioner with the shared sensor to be rented, where the shared sensor is used to detect outdoor environmental information.

It should be noted that in order to achieve hierarchical pricing of products, manufacturers usually install different types of sensors in air conditioners with different price. For example, higher-priced air conditioners are equipped with more types of sensors, and lower-priced air conditioners are equipped with fewer types of sensors, so that lower-priced air conditioners do not have some of the capabilities of detecting environmental information that higher-priced air conditioners can detect. In the present application, the lower-priced air conditioner can be used to detect various environmental information by renting sensors of the higher-priced air conditioner. This can not only reduce the cost of the air conditioner, but also meet the detection needs of the air conditioner.

After receiving the rental instruction triggered by the user, the first air conditioner determines the shared sensor to be rented based on the rental instruction, including determining the type of the shared sensor (such as humidity sensor, temperature sensor, etc.), the model of the shared sensor, and the detection accuracy of the shared sensor and other information. For example, assume that air conditioner A needs to run in a defrosting mode. At this time, it is necessary to detect the temperature value of the outdoor environment through a temperature sensor, and then adjust the operating parameters of the defrosting mode based on the temperature value, such as defrosting duration, fan speed, and compressor frequency, etc. If air conditioner A does not have a temperature sensor, air conditioner A needs to rent the air conditioner with the temperature sensor around it to detect the outdoor temperature value. At this time, the user can send the rental instruction to air conditioner A through the air conditioner APP or voice, air conditioner A automatically displays the rental information selection page on the display screen based on the rental instruction, and the user can select relevant information of the shared sensor to be rented based on this page.

The first air conditioner sends a rental request to the second air conditioner with the shared sensor to be rented based on the rental instruction triggered by the user to rent the shared sensor of the second air conditioner to detect outdoor environmental information. Alternatively, a rental request is sent to the cloud, and the cloud sends the rental request to the second air conditioner with the shared sensor to be rented, thereby realizing the rental of the shared sensor.

Step S20, receiving the detection value of the shared sensor sent by the second air conditioner.

The first air conditioner receives the detection value of the shared sensor sent by the second air conditioner. For example, if the shared sensor in the second air conditioner is a sensor open to the public, after receiving the rental request, the second sensor will send the detection value of the shared sensor to the corresponding first terminal. Alternatively, the detection value of the shared sensor is sent to the cloud, and the cloud sends the detection value to the first air conditioner based on address information of the first air conditioner.

Step S30, controlling the operation of the first air conditioner according to the detection value.

After receiving the detection value of the shared sensor to be rented from the second air conditioner or the cloud, the first air conditioner controls the operation of the first air conditioner based on the detection value. In an embodiment, the first air conditioner obtains the distance values between each second air conditioner and the first air conditioner after receiving the detection value of the shared sensor to be rented. Then, a first weight value of each second air conditioner is determined based on each distance value, and the weighted average value is obtained by weighting and summing up each detection value based on each first weight value. The weighted average value is used as the target detection value of the first air conditioner. For example, assuming that the sensor currently rented by air conditioner A is a temperature sensor to detect the temperature of the outdoor environment. At this time, it is determined that air conditioner A receives the temperature values returned by surrounding air conditioners B, C and D. It is necessary to obtain the distance values between air conditioner A and air conditioners B, C and D, where the distance values can be obtained from the cloud or calculated by air conditioner A. Then, the first weight values of air conditioners B, C and D are determined according to each distance value. The smaller the distance value, the greater the weight. For example, assuming that the distance value of air conditioner B is 20 meters, the corresponding weight value is 70%; the distance value of air conditioner C is 60 meters, and the corresponding weight value is 20%; the distance value of air conditioner D is 100 meters, and the corresponding weight value is 10%. The temperature value of the outdoor environment corresponding to air conditioner A is further determined based on each first weight value and temperature value. For example, assuming that the temperature values returned by air conditioners B, C and D are 26°C, 28°C and 29°C respectively, then the outdoor temperature value required by air conditioner A = (70%*26°C+20%*28°C+10%*29°C)/(70%+20%+10%)=26.7°C. Then, the operation of the first air conditioner is controlled according to the temperature value. For example, if the first air conditioner is currently running in the defrost mode, the operating parameters of the defrost mode are adjusted according to the temperature value, such as defrost duration, fan speed and compressor frequency, etc.

In one embodiment, when receiving a rental cancellation request triggered by the user, the first air conditioner obtains the second air conditioner to be cancelled from the rental based on the rental cancellation request, and cancels a rental of the shared sensor of the second air conditioner to be cancelled from the rental. Alternatively, the first air conditioner sends a rental cancellation instruction to the cloud based on the second air conditioner to be cancelled from the rental, and the cloud sends the rental cancellation instruction to the second air conditioner to be cancelled from the rental, so as to cancel the rental of the shared sensor of the second air conditioner to be cancelled from the rental.

In this embodiment, the shared sensor of the second air conditioner is rented and the detection value of the shared sensor is used to control the operation of the air conditioner. In this way, the cost of the air conditioner is reduced and the utilization rate of the sensor is improved.

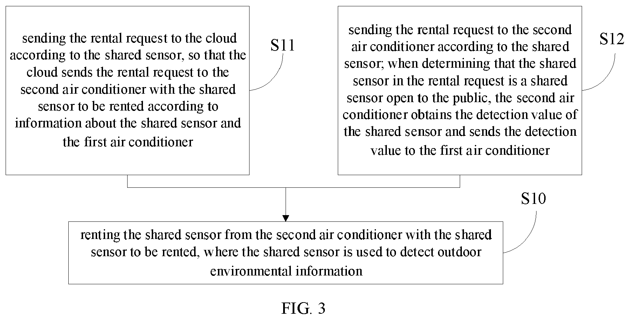

Further, referring to FIG. 3, a second embodiment of a method for controlling the air conditioner based on data of the shared sensor is proposed.

The difference between the second embodiment of the method for controlling the air conditioner based on data of the shared sensor and the first embodiment is that before renting the shared sensor from the second air conditioner with the shared sensor to be rented, the method includes:
step S11, sending the rental request to the cloud according to the shared sensor, so that the cloud sends the rental request to the second air conditioner with the shared sensor to be rented according to information about the shared sensor and the first air conditioner.

Before sending the rental request to the cloud, the first air conditioner needs to obtain rental information of the shared sensor set by the user. The rental information includes the rental period and the rental quantity. The rental quantity refers to the number of shared sensors to be rented. Then, the first air conditioner sends the rental request to the cloud based on the relevant information of the shared sensor, and the rental request includes the rental information of the shared sensor. After receiving the rental request, the cloud obtains the related information of the shared sensor to be rented and information of the first air conditioner according to the rental request, where the information of the first air conditioner includes IP information, location information and ID, etc. of the first air conditioner. Then, the rental request is generated based on the related information of the shared sensor and the information of the first air conditioner, and the rental request is sent to the second air conditioner with the shared sensor to be rented. For example, after determining the shared sensors to be rented, the cloud obtains N air conditioners B within S kilometers (such as 5 kilometers) around air conditioner A, and sends query instructions for the shared sensors to be rented to the N air conditioners B respectively. Then, the query information returned by the N air conditioners B is received, the air conditioner B with the shared sensor to be rented is determined based on the query information, it is determined that the shared sensor of the air conditioner B to be rented is open to the outside world, and the rental request is sent to the air conditioner B that has the shared sensor to be rented and is open to the public.

Step S12, sending the rental request to the second air conditioner according to the shared sensor.

When determining that the shared sensor in the rental request is a shared sensor open to the public, the second air conditioner obtains the detection value of the shared sensor and sends the detection value to the first air conditioner.

Since the first air conditioner and the second air conditioner can exchange information through the cloud or directly. For example, the first air conditioner and the second air conditioner can be connected wirelessly (including Wi-Fi, Bluetooth, ZigBee, etc.), therefore, the first air conditioner can directly send the rental request to the second air conditioner wirelessly. In an embodiment, the first air conditioner directly sends the rental request to the second air conditioner according to the related information of the shared sensor. The rental request includes the rental information of the shared sensor, such as rental duration and rental quantity. For example, the server can display the air conditioner that air conditioner A can rent through the display device of the mobile phone, wire controller or air conditioner. In this way, it is possible to obtain N air conditioners B with shared sensors to be rented within S kilometers (such as 5 kilometers) around air conditioner A from the server, and then send the rental request to these N air conditioners B. Alternatively, air conditioner A obtains historical rental information, obtains shared sensors for historical rental based on the historical rental information, determines that the shared sensors for historical rental include shared sensors currently to be rented, determines air conditioner B to be rented based on the historical rental information, and sends the rental request to air conditioner B to be rented.

When determining that the shared sensor in the rental request is a shared sensor open to the outside world, the second air conditioner obtains the detection value of the shared sensor and sends the detection value to the first air conditioner.

In this embodiment, the shared sensor of the second air conditioner is rented to detect outdoor environmental information by sending the rental request to the cloud or the second air conditioner. In this way, the cost of the air conditioner is reduced and the utilization rate of the sensor is improved.

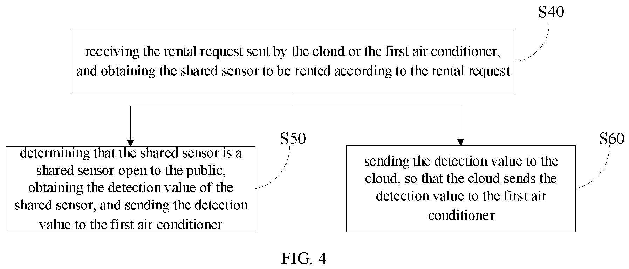

Further, referring to FIG. 4, a third embodiment of a method for controlling the air conditioner based on data of the shared sensor is proposed.

The method for controlling the air conditioner based on data of the shared sensor is applied to the second air conditioner, and the method includes:
step S40, receiving the rental request sent by the cloud or the first air conditioner, and obtaining the shared sensor to be rented according to the rental request.

The second air conditioner receives the rental request sent by the cloud or the first air conditioner. Since the rental request carries the information of the first air conditioner (including IP information, location information, ID, etc.) and the shared sensor to be rented, the second air conditioner can directly obtain the shared sensor to be rented based on the rental request.

Step S50, determining that the shared sensor is a shared sensor open to the public, obtaining the detection value of the shared sensor, and sending the detection value to the first air conditioner.

After determining the shared sensor to be rented, the second air conditioner determines that the shared sensor is open to the outside world, obtains the detection value of the shared sensor, and then sends the detection value of the shared sensor to the first air conditioner based on the address information of the first air conditioner.

For example, assuming that the shared sensor to be rented is a humidity sensor, the second air conditioner determines that its own humidity sensor is open to the outside world, and sends the humidity value detected by the humidity sensor to the first air conditioner. The user can send a rental control instruction for the shared sensor to the second air conditioner through the remote control or air conditioner APP, so that the second air conditioner sets the shared sensor to an open state according to the rental control instruction.

Step S60, sending the detection value to the cloud, so that the cloud sends the detection value to the first air conditioner.

The second air conditioner may also send the detection value of the shared sensor to the cloud, and the cloud sends the detection value of the shared sensor to the first air conditioner according to the address information of the first air conditioner. The same shared sensor in the second air conditioner can be rented to multiple first air conditioners at the same time.

In an embodiment, the second air conditioner can terminate the rental of the shared sensor during the process of renting the shared sensor to the first air conditioner. At this time, the second air conditioner can send a termination rental instruction to the first air conditioner renting the shared sensor; or send the termination rental instruction to the cloud, so that the cloud sends the termination rental instruction to the first air conditioner that rents the shared sensor.

In this embodiment, the second air conditioner rents its shared sensors to one or more first air conditioners, thereby improving the utilization rate of the shared sensors.

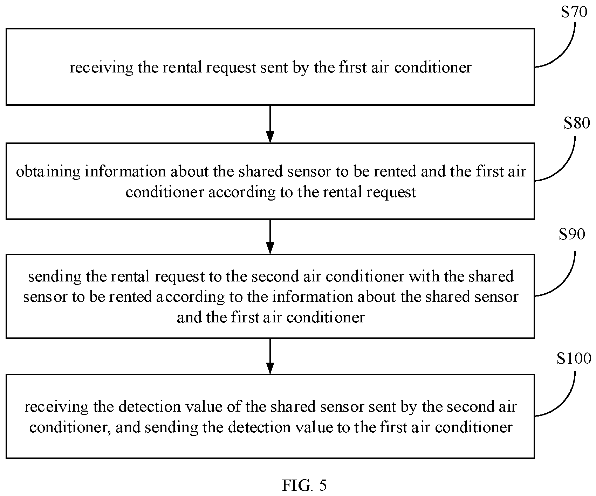

Further, referring to FIG. 5, a fourth embodiment of a method for controlling the air conditioner based on data of the shared sensor is proposed.

The method for controlling the air conditioner based on data of the shared sensor is applied to the cloud, and the method includes:
step S70, receiving the rental request sent by the first air conditioner.

The cloud receives the rental request sent by the first air conditioner. For example, the cloud can receive the rental request sent by the first air conditioner through the remote control/air conditioner APP, etc.

Step S80, obtaining information about the shared sensor to be rented and the first air conditioner according to the rental request.

The cloud obtains the related information of the shared sensor to be rented and the information of the first air conditioner according to the rental request. The related information of the shared sensor to be rented includes the type of the shared sensor (such as humidity sensor, temperature sensor, etc.), the model of the shared sensor, the detection accuracy of the shared sensor, etc.; the information of the first air conditioner includes the IP information, location information, ID, etc. of the first air conditioner.

Step S90, sending the rental request to the second air conditioner with the shared sensor to be rented according to the information about the shared sensor and the first air conditioner.

After determining the shared sensor to be rented of the first air conditioner, the cloud sends the rental request to the second air conditioner with the shared sensor to be rented based on the information of the shared sensor to be rented and the first air conditioner. For example, after determining the shared sensor to be rented, the cloud obtains N air conditioners B within S kilometers (such as 5 kilometers) around air conditioner A, and sends query instructions for the shared sensors to be rented to the N air conditioners B respectively. Then, the query information returned by the N air conditioners B is received, and the air conditioner B with the shared sensor to be rented is determined according to the query information. At the same time, the shared sensor of the air conditioner B to be rented is determined to be open to the outside world, and the rental request is sent to the air conditioner B that has the shared sensor to be rented and is open to the outside world. If the cloud does not detect the air conditioner B within S kilometers around the air conditioner A, or only detects one air conditioner B, at this time, the cloud can expand the detection range to bring more air conditioners B into the detection range. At the same time, for extreme situations (for example, even if the detection range is expanded, one air conditioner B is still detected), at this time, after obtaining the detection value returned by the air conditioner B, the first air conditioner needs to correct the detection value, such as correcting the detection value according to the distance value.

Step S100, receiving the detection value of the shared sensor sent by the second air conditioner, and sending the detection value to the first air conditioner.

The cloud receives the detection value of the shared sensor sent by the second air conditioner, and then sends the detection value to the first air conditioner according to the address information of the first air conditioner.

After the second air conditioner rents the sensor to the first air conditioner, it will receive the corresponding rental fee, which will be statistically settled by the cloud. In an embodiment, the cloud obtains the rental duration of each shared sensor, the distance value between the first air conditioner and each second air conditioner, and the fee amount required to rent the shared sensor. Then, a second weight value of each second air conditioner is determined according to the rental duration and distance value. The rental fee of each second air conditioner is determined according to the fee amount and each second weight value. Finally, the rental is settled according to the rental fee, and the rental fee after settlement is sent to the target objects associated with each second air conditioner (including bank cards, WeChat, Alipay, etc.). For example, assume that air conditioner A rents the temperature sensors of surrounding air conditioners B, C and D to detect the temperature. The rental duration of air conditioner B is 30 days, and the distance from air conditioner A is 20 meters; the rental duration of air conditioner C is 20 days, and the distance from air conditioner A is 60 meters; and the rental duration of air conditioner D is 10 days, and the distance from air conditioner A is 100 meters. Secondly, the cost of renting the temperature sensor by air conditioner A is 10 yuan, and the rental fee is determined by the rental platform (such as the cloud). Further, the second weight value of the second air conditioner is determined according to the rental duration and the distance value, the longer the rental duration and the shorter the distance, the greater the weight value. For example, the weight value of air conditioner B is 70%, the weight value of air conditioner C is 20%, and the weight value of air conditioner D is 10%. Since the rental platform will extract a certain commission, for example, 2 yuan is extracted, the remaining 8 yuan is the fee obtained by each air conditioner. For example, the fee obtained by air conditioner B is 70%*8=5.6 yuan, the fee obtained by air conditioner C is 20%*8=1.6 yuan, and the fee obtained by air conditioner D is 10%*8=0.8 yuan. After determining the fee of each air conditioner, the rental platform sends the fee to the bank card/WeChat/Alipay, etc. associated with the air conditioner. At the same time, the rental platform will generate rental order information (including rental duration, rental terminal information, shared sensors for rental, rental details, etc.) and send the order information to the first air conditioner and the second air conditioner.

In this embodiment, after receiving the rental request sent by the first air conditioner, the cloud determines the second air conditioner that meets the rental conditions, and sends the rental request to the second air conditioner, so that the second air conditioner rents the shared sensor to the first air conditioner, thereby improving the utilization rate of the shared sensor.

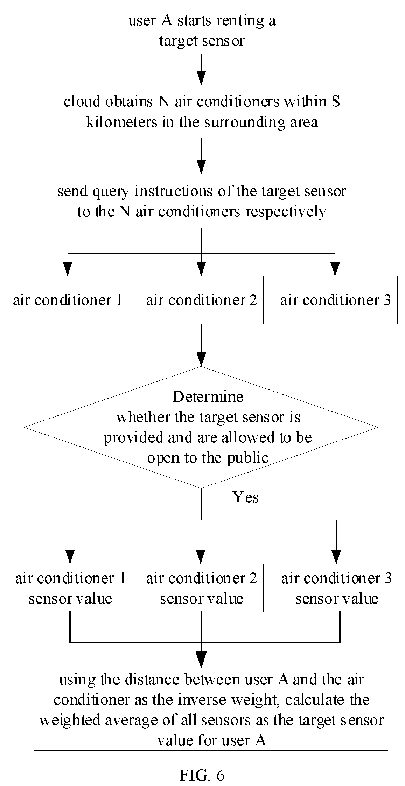

In order to better illustrate the method for controlling the air conditioner based on the data of the shared sensor in the present application, referring to FIG. 6, which is a schematic operation flow diagram of the method for controlling the air conditioner based on the data of the shared sensor in the present application.

In this embodiment, user A starts renting a target sensor, and the target sensor can be a PM2.5 sensor, a temperature sensor, a humidity sensor, an air detection sensor, etc. After receiving the rental request sent by the first air conditioner, the cloud obtains N air conditioners within S kilometers (such as 5 kilometers) in the surrounding area, and sends query instructions of the target sensor to the N air conditioners respectively. After receiving the query instructions, air conditioner 1, air conditioner 2 and air conditioner 3 return their own sensor information to the cloud. Based on the sensor information, the cloud determines whether air conditioner 1, air conditioner 2 and air conditioner 3 are equipped with target sensors and are allowed to be open to the public. After determining that there are target sensors and allowed to be open to the outside world, the cloud sends the rental request to air conditioner 1, air conditioner 2 and air conditioner 3, so that air conditioner 1, air conditioner 2 and air conditioner 3 send the detection value of the target sensor to the air conditioner B corresponding to user A, and obtain the distance values between air conditioner B and air conditioner 1, air conditioner 2 and air conditioner 3. The distance value is used as the inverse weight to calculate the weighted average corresponding to the detection values of all target sensors, and the weighted average is used as the target detection value of user A. In an embodiment, after receiving the query instructions, the air conditioner 1, the air conditioner 2 and the air conditioner 3 determine whether they are provided with the target sensor, determine that the target sensor is provided and is allowed to be open to the public, and directly sent the detection value of the target sensor to air conditioner B. The air conditioner B adjusts the operating parameters according to the received detection value.

In this embodiment, the shared sensor of the second air conditioner is rented and the detection value of the shared sensor is used to control the operation of the air conditioner. In this way, the cost of the air conditioner is reduced and the utilization rate of the sensor is improved.

In addition, the present application also provides a sharing device, which includes a memory, a processor, and a program for controlling the air conditioner based on data of the shared sensor stored on the memory and executable on the processor. The device rents the shared sensor of the second air conditioner, and uses the detection value of the shared sensor to control the operation of the air conditioner. This reduces the cost of the air conditioner and improves the utilization rate of the sensor.

In addition, the present application also provides a storage medium on which a program for controlling the air conditioner based on the data of the shared sensor is stored. When the program for controlling the air conditioner based on the data of the shared sensor is executed by the processor, steps of the method for controlling the air conditioner based on the data of the shared sensor as described above are implemented.

Those skilled in the art will understand that embodiments of the present application can be provided as methods, systems, or computer program products. Accordingly, the present application can take the form of an entirely hardware embodiment, an entirely software embodiment, or an embodiment that combines software and hardware. Furthermore, the present application can take the form of a computer program product implemented on one or more computer available storage media (including, but not limited to, disk storage, CD-ROM, optical storage, etc.) containing computer available program code.

The present application is described with reference to flowchart and/or block diagrams of methods, devices (systems) and computer program products according to embodiments of the present application. It should be understood that each process and/or block in the flowchart and/or block diagrams, and combinations of processes and/or blocks in the flowchart and/or block diagrams, can be implemented by computer program instructions. These computer program instructions can be provided to a processor of a general purpose computer, special purpose computer, embedded processor, or other programmable data processing device to produce a machine that generates the instructions executed by the processor of the computer or other programmable data processing device for realizing the functions specified in a process or processes in the flowchart and/or a block or blocks in a block diagram.

These computer program instructions can also be stored in a computer-readable memory that causes a computer or other programmable data processing device to operate in a particular manner, such that the instructions stored in the computer-readable memory produce an article of manufacture including the instruction device, the instruction device implements the functions specified in a process or processes in the flowchart and/or in a block or blocks in the block diagram.

These computer program instructions can also be loaded onto a computer or other programmable data processing device, causing a series of operating steps to be performed on the computer or other programmable device to generate computer-implemented processing. The instructions executed on the computer or other programmable devices provide steps for implementing the functions specified in a process or processes in the flowchart and/or a block or blocks in the block diagram.

It should be noted that in the claims, any reference signs placed in the parentheses shall not be construed as limiting the claim. The word "comprising" does not exclude the presence of elements or steps other than those listed in a claim. The word "a" or "an" preceding a component does not exclude the presence of a plurality of such components. The present application can be implemented by means of hardware comprising several different components and by means of a suitably programmed computer. In the element claim enumerating several means, several of these means may be embodied by the same item of hardware. The use of the words first, second, third, etc. does not indicate any order. These words can be interpreted as names.

Although alternative embodiments of the present application have been described, those skilled in the art will be able to make additional changes and modifications to these embodiments once the basic inventive concepts are apparent. Therefore, it is intended that the appended claims be construed to include alternative embodiments and all changes and modifications that fall within the scope of the present application.

Obviously, those skilled in the art can make various changes and modifications to the present application without departing from the spirit and scope of the present application. In this way, if these changes and modifications of the present application fall within the scope of the claims of the present application and equivalent technologies, the present application is also intended to include these changes and modifications.

## Claims

1. A method for controlling an air conditioner based on data of a shared sensor, applied to a first air conditioner, comprising:
renting a shared sensor from a second air conditioner with the shared sensor to be rented, the shared sensor being configured to detect outdoor environmental information;
receiving a detection value of the shared sensor sent by the second air conditioner; and
controlling operation of the first air conditioner according to the detection value.

2. The method for controlling the air conditioner based on the data of the shared sensor of claim 1, wherein controlling the operation of the first air conditioner according to the detection value comprises:
obtaining a distance value between each of the second air conditioners and the first air conditioner, and determining a first weight value of each of the second air conditioners according to each of the distance values;
performing a weighted sum on the detection values according to the first weight values to obtain a weighted average; and
using the weighted average as a target detection value of the first air conditioner, and controlling the operation of the first air conditioner according to the target detection value.

3. The method for controlling the air conditioner based on the data of the shared sensor of claim 1, wherein before renting the shared sensor from the second air conditioner with the shared sensor to be rented, the method comprises:
sending a rental request to a cloud according to the shared sensor, so that the cloud sends the rental request to the second air conditioner with the shared sensor to be rented according to information of the shared sensor and the first air conditioner; or
sending the rental request to the second air conditioner according to the shared sensor,
wherein in response to determining that the shared sensor in the rental request is a shared sensor open to the public, the second air conditioner sends the detection value of the shared sensor to the first air conditioner.

4. The method for controlling the air conditioner based on the data of the shared sensor of claim 3, wherein sending the rental request to the cloud according to the shared sensor comprises:
obtaining rental information of the shared sensor for renting, wherein the rental information comprises rental duration and rental quantity;
sending a rental request comprising the rental information to the cloud according to the shared sensor; or
sending a rental request to the second air conditioner according to the shared sensor comprises:
sending the rental request comprising the rental information to the second air conditioner according to the shared sensor.

5. The method for controlling the air conditioner based on the data of the shared sensor of claim 1, further comprising:
receiving a rental cancellation request triggered by a user, and obtaining the second air conditioner to be cancelled from the rental according to the rental cancellation request;
sending a rental cancellation instruction to the second air conditioner to be cancelled from the rental to cancel the rental of the shared sensor of the second air conditioner to be cancelled from the rental; or
sending the rental cancellation instruction to the cloud according to the second air conditioner to be cancelled from the rental, so that the cloud sends the rental cancellation instruction to the second air conditioner to be cancelled from the rental, so as to cancel the rental of the shared sensor of the second air conditioner to be cancelled from the rental.

6. A method for controlling an air conditioner based on data of a shared sensor, applied to a second air conditioner, comprising:
receiving a rental request sent by a cloud or a first air conditioner, and obtaining the shared sensor to be rented according to the rental request; and
in response to determining that the shared sensor is a shared sensor open to the public, obtaining a detection value of the shared sensor and sending the detection value to the first air conditioner; or
sending the detection value to the cloud, so that the cloud sends the detection value to the first air conditioner.

7. A method for controlling an air conditioner based on data of a shared sensor, applied to a cloud, comprising:
receiving a rental request sent by a first air conditioner;
obtaining information about the shared sensor to be rented and the first air conditioner according to the rental request;
sending the rental request to a second air conditioner with the shared sensor to be rented according to the information about the shared sensor and the first air conditioner; and
receiving a detection value of the shared sensor sent by the second air conditioner, and sending the detection value to the first air conditioner.

8. The method for controlling the air conditioner based on the data of the shared sensor of claim 7, further comprising:
obtaining rental duration of each of the shared sensors, a distance value between the first air conditioner and each of the second air conditioners, and fee amount required to rent the shared sensor;
determining a second weight value for each of the second air conditioners according to the rental duration and the distance value;
determining a rental fee for each of the second air conditioners according to the fee amount and each of the second weight values; and
settling rental according to the rental fee.

9. A sharing device, comprising a memory, a processor, and a program for controlling an air conditioner based on data of a shared sensor stored in the memory and run on the processor, wherein steps of a method of any one of claims 1 to 8 are implemented when the program for controlling the air conditioner based on the data of the shared sensor is executed by the processor.

10. A storage medium, wherein a program for controlling an air conditioner based on data of a shared sensor is stored on the storage medium, and steps of a method of any one of claims 1 to 8 are implemented when the program for controlling the air conditioner based on the data of the shared sensor is executed by a processor.
